# EUROPÄISCHE PATENTSCHRIFT

(11) **EP 2 582 963 B1**
(45) Veröffentlichungstag und Bekanntmachung des Hinweises auf die Patenterteilung: **24.06.2015**
(21) Anmeldenummer: 11717499.5
(22) Anmeldetag: 21.04.2011
(51) Int. Cl.: F03B 1/04, F03B 3/18, F03B 7/00

(54) **PELTONTURBINE MIT EINEM WASSERABFUHRSYSTEM**
PELTON TURBINE HAVING A WATER DRAIN SYSTEM
TURBINE PELTON COMPRENANT UN SYSTÈME D'ÉVACUATION D'EAU

(30) Priorität: 21.06.2010 DE 102010024475
(43) Veröffentlichungstag der Anmeldung: 24.04.2013
(73) Patentinhaber: Voith Patent GmbH, 89522 Heidenheim (DE)
(72) Erfinder: MACK, Reiner, 89547 Dettingen (DE); ROHNE, Wolfgang, 89518 Heidenheim (DE)
(74) Vertreter: Dr. Weitzel & Partner
(86) Internationale Anmeldenummer: PCT/EP2011/002067
(87) Internationale Veröffentlichungsnummer: WO 2011/160742

(56) Entgegenhaltungen:
- AT-B- 366 476
- CH-A- 377 294
- DE-C- 883 426
- DE-U1-202004 019 537
- DE-U1-202006 010 273
- FR-A5- 2 247 920
- US-A- 1 579 146

## Beschreibung

Die Erfindung betrifft eine Peltonturbine, umfassend ein Laufrad mit einer Anzahl von Bechern, zwei oder mehrere Düsen zum Aufbringen eines Wasserstrahles auf die Becher sowie beidseits des Laufrades mit jeweils einer zum Laufrad koaxialen ringförmigen Leitwand zum Ableiten von Spritzwasser. Auf WO 2006/066691 A1 wird verwiesen.

Bei einer Peltonturbine wird das Nutzgefälle in den Düsen in kinetische Energie umgesetzt. Die Becher sind im Allgemeinen Doppelbecher, deren beide Schaufeln von einer Schneide voneinander getrennt sind. Der Wasserstrahl wird im Becher um nahezu 180 Grad umgelenkt. Hierdurch wird fast die gesamte kinetische Energie des Wasserstrahles am Laufradumfang in mechanische Energie umgesetzt. Die verbleibende Restenergie im umgelenkten Strahl beträgt noch etwa 2 bis 4 %. Der umgelenkte Wasserstrahl wandert als Spritzwasser im Wesentlichen in Achsrichtung von der Ebene des Laufrades hinweg und prallt auf ein Turbinengehäuse beziehungsweise auf die freie Oberfläche des Unterwasserkanals.

Durch die genannten Leitwände wird das Spritzwasser abgeleitet. Hierdurch ist es möglich, bei Peltonturbinen mit horizontaler Welle den sogenannten Freihang zu verringern, somit den Abstand zwischen der Laufradwelle und dem Spiegel des Unterwassers. Hierdurch lässt sich Fallhöhe gewinnen. Wegen der besseren Spritzwasserabfuhr lässt sich auch eine größere Anzahl von Düsen vorsehen. Hierdurch wird die Energiedichte vergrößert.

Bei der bekannten Ausführungsform gemäß der genannten Druckschrift sind die Düsenkörper zum Aufbringen der Wasserstrahlen radial außerhalb der spritzwasserableitenden Leitwände angeordnet. Die Leitwände sind deshalb mit Bohrungen versehen, durch die der Wasserstrahl hindurchtritt. Der Wasserstrahl hat bekanntlich einen unterschiedlich großen Durchmesser, je nach Wasseranfall. Die Bohrungen haben eine lichte Weite, um den Wasserstrahl mit dem größten Durchmesser aufnehmen zu können. Es wird somit vermieden, dass der Wasserstrahl die Leibung der Bohrung berührt, weil hierdurch Reibungsenergie auftritt, die den Wirkungsgrad der Turbine verringert.

DE 883 426 C beschreibt eine Peltonturbine mit einem Laufrad, das an seinem Umfang eine Anzahl von Peltonbechern trägt, ferner zwei oder mehrere Düsenkörper zum Aufbringen eines Wasserstrahles auf die Peltonbecher. Auf einer Seite des Laufrades sowie radial außerhalb der Peltonbecher befindet sich eine ringförmige Leitwand zum Ableiten von Spritzwasser. FR 2 247 920 A5 beschreibt ebenfalls eine Peltonturbine, enthält jedoch keine Angaben über Leitbleche.

Der Erfindung liegt die Aufgabe zugrunde, eine Peltonturbine gemäß dem Oberbegriff von Anspruch 1 derart zu gestalten, dass der Wirkungsgrad nochmals verbessert wird insbesondere durch Maßnahmen im Bereich der Düsen und der Leitwände.

Die Erfinder haben erkannt, dass auch ein zu großer Bohrungsdurchmesser in der Leitwand, bei dem zwischen Wasserstrahl und Reibung der Bohrung ein lufterfüllter Ringraum verbleibt, ungünstig ist.

Demgemäß werden die Leitwände mit Öffnungen versehen, die nicht nur den Wasserstrahl aufnehmen können, sondern den im Durchmesser wesentlich größeren Düsenkopf. Außerdem wird die Düse durch die betreffende Leitwand hindurchgeführt, sodass sich ihre Mündung an der radial inneren, spritzwasserberührten Fläche der Leitwand befindet. Auch könnte die Mündung noch radial einwärts über die spritzwasserberührte Fläche der Leitwand hinausragen. Bei einer solchen Konfiguration tritt der Wasserstrahl somit nicht unmittelbar durch eine Bohrung in der Leitwand hindurch, sondern tritt als völlig ungeführter Freistrahl aus der Mündung der Düse aus und gelangt unmittelbar zu den Bechern.

Die Erfinder haben weiterhin erkannt, dass beim Stande der Technik Spritzwasser nach dem Aufprallen des Wasserstrahles auf den Peltonbecher in die Bohrung zurückspritzt und den Strahl stört. Bei der erfindungsgemäßen Ausführungsform unterbleibt eine solche Störung.

Es hat sich gezeigt, dass hierdurch der Wirkungsgrad gegenüber bekannten Ausführungsformen verbessert wird. Eine Berührung zwischen Wasserstrahl und der Leibung einer Bohrung wird vermieden.

Der Stand der Technik sowie die Erfindung sind anhand der Zeichnung näher erläutert. Darin ist im Einzelnen Folgendes dargestellt:
- Figur 1: veranschaulicht eine Ausführungsform gemäß dem Stande der Technik, und zwar gemäß der oben genannten Druckschrift WO 2006/066691 A1.
- Figur 2: zeigt die Peltonturbine gemäß Figur 1 in einem achssenkrechten Schnitt.
- Figur 3: zeigt die Turbine gemäß der Erfindung in einem Axialschnitt.
- Figur 4: zeigt die Turbine gemäß Figur 3 in einem achssenkrechten Schnitt.

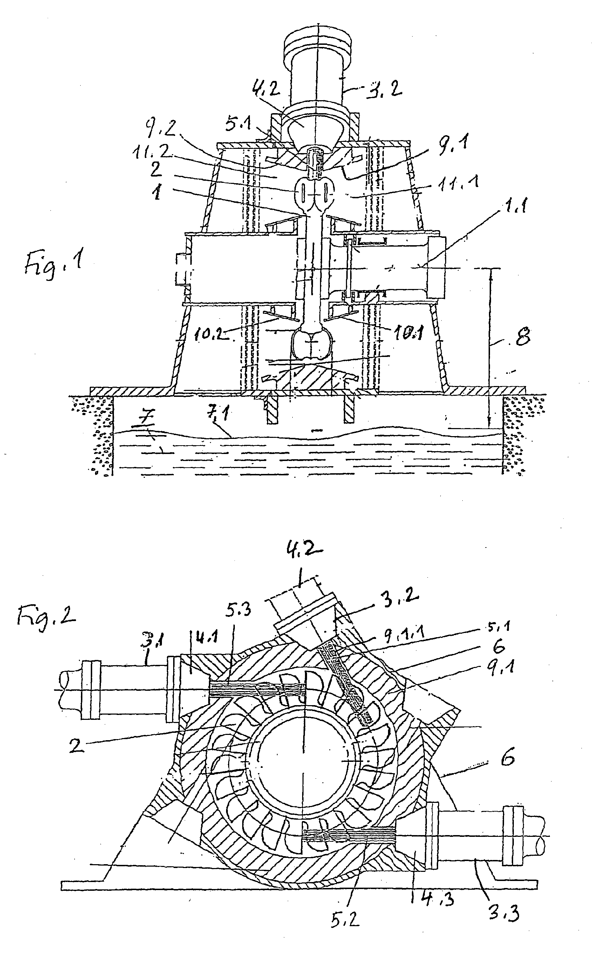

Die in den Figuren 1 und 2 gezeigte Peltonturbine weist ein Laufrad 1 mit einer horizontalen Drehachse 1.1 auf. Am Umfang des Laufrades 1 ist eine Vielzahl von Peltonbechern 2 befestigt.

Es sind drei Düsen dargestellt. Diese weisen jeweils einen Düsenkörper 3.1, 3.2, 3.3 auf. Jeder Düsenkörper trägt an seinem freien Ende je einen Düsenkopf, nämlich 4.1 beziehungsweise 4.2 beziehungsweise 4.3.

Aus den Düsen tritt ein Wasserstrahl 5.1, 5.2 und 5.3 aus, der gegen die Peltonbecher 2 gerichtet ist. Wie man aus Figur 2 erkennt, sind zwei weitere Aufnahmeöffnungen zur Aufnahme je eines weiteren Düsenkopfes vorgesehen.

Die Peltonturbine weist ein Gehäuse 6 auf. Das in den Bechern umgelenkte Spritzwasser wird gegen die Innenwände eines Gehäuses 6 geschleudert und gelangt in einen Unterwasserkanal 7 mit einem Spiegel 7.1. Der sogenannte Freihang 8 ist der Abstand zwischen der Drehachse 1.1 des Laufrades 1 und dem Unterwasserspiegel 7.1.

Wie man aus Figur 1 erkennt, sind beidseits des Laufrades 1 und radial außerhalb der Peltonbecher 2 zwei ringförmige Leitwände 9.1, 9.2 vorgesehen. Außerdem sind zwei entsprechende Leitwände 10.1, 10.2 vorgesehen, und zwar wiederum beidseits des Laufrades 1, aber radial innerhalb der Peltonbecher 2.

Diese Leitwand-Paarung stellt einen Spritzwasser-Abfuhrkanal 11.1, 11.2 dar, jeweils auf einer Seite des Laufrades 1, durch den das Spritzwasser von den Peltonbechern 2 hinweg geleitet wird.

Von besonderem Interesse ist die Anordnung der Düsenköpfe 4.1, 4.2, 4.3. Diese befinden sich nämlich im Wesentlichen radial außerhalb der Leitwände 9.1, 9.2. Die Leitwände haben Bohrungen, von denen nur eine Bohrung 9.1.1 zu sehen ist. Der Wasserstrahl, der aus dem betreffenden Düsenkörper austritt, tritt durch die genannte Bohrung hindurch und gelangt somit zum Peltonbecher 2. Die lichte Weite der Bohrung ist genügend groß, um auch einen Wasserstrahl großen Durchmessers hindurchzulassen.

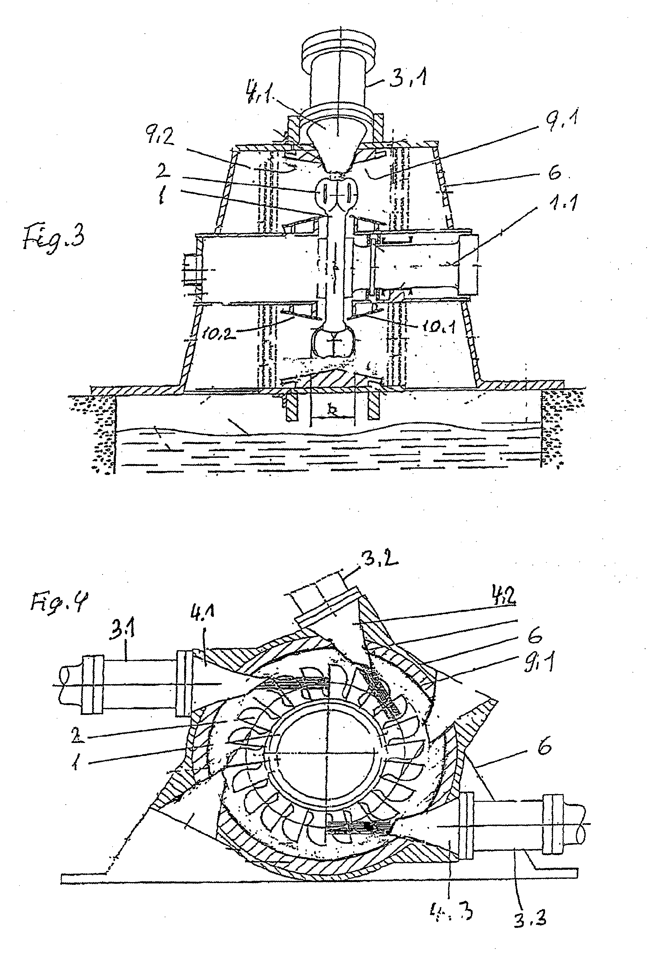

Anders sieht die Turbine gemäß der Erfindung aus. Siehe die Figuren 3 und 4. Hier ist in den radial äußeren Leitwänden 9.1, 9.2 eine genügend große Öffnung vorgesehen, durch welche der betreffende Düsenkopf 4.1, 4.2, 4.3 hindurchgeführt ist, und zwar soweit radial nach innen, dass sich dessen Mündung am radial inneren Ende der Leitwände 9.1, 9.2 befindet. Der betreffende Wasserstrahl tritt nunmehr als völlig freier Strahl aus der Mündung des betreffenden Düsenkopfes 4.1, 4.2, 4.3 aus, ohne dass er durch eine Bohrung hindurchtreten muss, wie der Bohrung 9.1.1. Dies führt zu einer deutlichen Wirkungsgradsteigerung der gesamten Peltonturbine gemäß einer Turbine gemäß dem Stande der Technik.

Die wasserführenden Flächen der Leitwände 9.1, 9.2 und 10.1, 10.2 haben im vorliegenden Falle zwar eine Neigung gegen die Drehachse 1.1 des Laufrades 1. Sie könnten aber auch einen anderen Winkel gegen die Drehachse aufweisen, beispielsweise parallel zu dieser verlaufen.

Auch ist es denkbar, auf die inneren Leitwände 10.2 zu verzichten.

Gemäß einem weiteren Gedanken der Erfindung sind die Leitwände 9.1, 9.2 und/oder 10.1, 10.2 nicht als durchgehende Ringe ausgebildet, sondern aus Ringsegmenten, die miteinander einen Ring bilden.

Die Segmente können kreisbogenförmig sein. Sie können aber auch gradlinig ausgeführt sein.

Sind die Leitwände in dieser Weise segmentiert, so können die beiden Enden zweier einander benachbarter Segmente einen gegenseitigen Abstand haben, in dem ein Düsenkörper 3.1, 3.2, 3.3 Platz hat.

Die Düsenkörper können mit den Leitwänden fest verbunden sein. Sie können aber auch von diesen frei montiert und mit dem Gehäuse 6 fest verbunden sein.

Die genannte Segment-Bauweise hat den Vorteil einer einfachen und leichten Montage im Falle einer Nachrüstung einer konventionellen Turbine.

Die äußeren und/oder die inneren Leitwände können baulich vereinigt sein, oder aus einem einzigen Bauteil bestehen. Dies gilt für die Ausführungsform mit durchgehenden Ringen oder auch für die segmentierte Ausführungsform.

Die Turbine kann eine vertikale oder eine horizontale Drehachse aufweisen. Die Drehachse kann auch gegen die horizontale geneigt sein.

Handelt es sich um eine Turbine mit horizontaler oder gegen die horizontale geneigten Drehachse, so kann eine Leitwand verwendet werden, die nur aus einem Bogensegment besteht, das den oberen oder einen oberen Bereich des Laufrades umschließt.

### Bezugszeichenliste

- 1: Laufrad
- 1.1: Drehachse des Laufrads
- 2: Peltonbecher
- 3.1: Düsenkörper
- 3.2: Düsenkörper
- 3.3: Düsenkörper
- 4.1: Düsenkopf
- 4.2: Düsenkopf
- 4.3: Düsenkopf
- 5.1: Wasserstrahl
- 5.2: Wasserstrahl
- 5.3: Wasserstrahl
- 6: Gehäuse
- 7: Unterwasserkanal
- 7.1: Unterwasserspiegel
- 8: Freihang
- 9.1: Leitwand
- 9.1.1: Bohrung
- 9.2: Leitwand
- 10.1: Leitwand
- 10.2: Leitwand

## Patentansprüche

1. Peltonturbine
mit einem Laufrad (1), das an seinem Umfang eine Anzahl von Peltonbechern (2) trägt;
mit zwei oder mehreren Düsenkörpern (3.1, 3.2, 3.3) zum Aufbringen eines Wasserstrahles (5.1, 5.2, 5.3) auf die Peltonbecher (2);
beidseits des Laufrades (1) sowie radial außerhalb der Peltonbecher (2) befindet sich eine zur Drehachse (1.1) ringförmige erste Leitwand (9.1, 9.2) zum Ableiten von Spritzwasser;
die Leitwand (9.1, 9.2) weist Öffnungen zum Aufnehmen jeweils eines Düsenkörpers (3.1, 3.2, 3.3) auf;
jeder Düsenkörper (3.1, 3.2, 3.3) erstreckt sich mit seiner Mündung bis wenigstens zum inneren Radius der ersten Leitwand (9.1, 9.2);
radial innerhalb der Peltonbecher (2) ist eine zweite ringförmige Leitwand (10.1, 10.2) zum Ableiten von Spritzwasser vorgesehen;
**gekennzeichnet durch** die folgenden Merkmale:
die einzelne erste Leitwand (9.1, 9.2) und/oder zweite Leitwand (10.1, 10.2) ist aus Segmenten aufgebaut, die sich in Umfangsrichtung erstrecken;
zwischen den einander zugewandten Enden zweier einander benachbarter Segmente ist eine Öffnung zum Hindurchführen eines Düsenkörpers (3.1, 3.2, 3.3) vorgesehen.

2. Peltonturbine nach Anspruch 1, **dadurch gekennzeichnet, dass** die erste Leitwand (9.1, 9.2) koaxial zur Drehachse (1.1) des Laufrades (1) gestaltet ist.

3. Peltonturbine nach Anspruch 1 oder 2, **dadurch gekennzeichnet, dass** die erste Leitwand (9.1, 9.2) konisch oder zylindrisch ist, oder sich in zunehmender Entfernung vom Laufrad (1) trompetenartig erweitert.

4. Peltonturbine nach einem der Ansprüche 1 bis 3, **dadurch gekennzeichnet, dass** der Abstand zwischen dem radial äußeren Ende der Peltonbecher (2) und dem radial inneren Ende der ersten Leitwand (9.1, 9.2) wenigstens gleich der radialen Erstreckung eines jeden Peltonbechers (2) ist.

5. Peltonturbine nach einem der Ansprüche 1 bis 4, **dadurch gekennzeichnet, dass** die Düsenkörper (3.1, 3.2, 3.3) mit dem Gehäuse (6) fest verbunden sind.

6. Peltonturbine nach einem der Ansprüche 1 bis 5, **gekennzeichnet durch** die folgenden Merkmale:
die Drehachse (1.1) des Laufrades (1) verläuft horizontal oder vertikal oder ist gegen die Horizontale geneigt;
wenigstens eine der Leitwände (9.1, 9.2; 10.1, 10.2) ist nur ein Ringsegment, das wenigstens einen wesentlichen Teil des unteren Laufrad-Umfanges freilässt.

## Claims

1. A Pelton turbine,
1.1 comprising a blade wheel (1) which carries a number of Pelton buckets (2) on its circumference;
1.2 comprising two or more nozzle bodies (3.1, 3.2, 3.3) for applying a water jet (5.1, 5.2, 5.3) to the Pelton buckets (2);
1.3 a guide wall (9.1, 9.2) which is annular in relation to the rotational axis (1.1) and is provided for discharging spray water is disposed on both sides of the blade wheel (1) and radially outside of the Pelton buckets (2);
1.4 the guide wall (9.1, 9.2) comprises openings for accommodating one respective nozzle body (3.1, 3.2, 3.3);
1.5 each nozzle body (3.1, 3.2, 3.3) extends with its orifice at least up to the inner radius of the guide wall (9.1, 9.2);
1.6 a further annular guide wall (10.1, 10.2) for discharging spray water is provided radially within the Pelton buckets (2);
**characterized by** the following features
1.7 the individual guide wall (9.1, 9.2) and/or (10.1, 10.2) is composed of segments which extend in the circumferential direction;
1.8 an opening for leading through a nozzle body (3.1, 3.2, 3.3) is provided between the mutually facing ends of two mutually adjacent segments.

2. A Pelton turbine according to claim 1, **characterized in that** the guide wall (9.1, 9.2) is arranged to be coaxially to the rotational axis (1.1) of the blade wheel (1).

3. A Pelton turbine according to claim 1 or 2, **characterized in that** the guide wall (9.1, 9.2) is conical or cylindrical, or it expands in the manner of a trumpet with increasing distance from the blade wheel (1).

4. A Pelton turbine according to one of the claims 1 to 3, **characterized in that** the distance between the radially outer end of the Pelton buckets (2) and the radially inner end of the guide wall (9.1, 9.2) is at least equal to the radial extension of each Pelton bucket (2).

5. A Pelton turbine according to one of the claims 1 to 4, **characterized in that** the nozzle bodies (3.1, 3.2, 3.3) are free from any mechanical connection with the guide walls (10.1, 10.2).

6. A Pelton turbine according to one of the claims 1 to 5, **characterized by** the following features:
6.1 the rotational axis (1.1) of the blade wheel (1) extends horizontally or vertically or is inclined to the horizontal;
6.2 at least one of the guide walls (9.1, 9.2; 10.1, 10.2) is only a ring segment which leaves open at least a substantial part of the bottom circumference of the blade wheel.

## Revendications

1. Turbine Pelton,
1.1 avec un disque de rotor (1), portant sur son périmètre un certain nombre d'augets Pelton (2);
1.2 avec deux ou plusieurs corps de buse (3.1, 3.2, 3.3) pour appliquer un jet d'eau (5.1, 5.2, 5.3) sur les augets Pelton (2);
1.3 une première paroi de guidage (9.1, 9.2), annulaire par rapport à l'axe de rotation (1.1), prévue pour l'évacuation de l'eau de pulvérisation se trouve des deux côtés du disque de rotor (1) de même radialement à l'extérieur des augets Pelton (2) ;
1.4 la paroi de guidage (9.1, 9.2) présente des ouvertures pour recevoir respectivement un corps de buse (3.1, 3.2, 3.3) ;
1.5 chaque corps de buse (3.1, 3.2, 3.3) s'étend avec son orifice au moins jusqu'au rayon interne de la première paroi de guidage (9.1, 9.2) ;
1.6 une seconde paroi de guidage annulaire (10.1, 10.2) prévue pour l'évacuation de l'eau de pulvérisation est aménagée radialement à l'intérieur des augets Pelton (2) ;
présentant les caractéristiques suivantes:
1.7 la première paroi de guidage (9.1, 9.2) et/ou la seconde paroi de guidage (10.1, 10.2) sont composées de segments s'étendant dans le sens de la circonférence ;
1.8 une ouverture est prévue entre les extrémités opposées de deux segments adjacents, pour permettre le passage d'un corps de buse (3.1, 3.2, 3.3).

2. Turbine Pelton selon la revendication 1, **caractérisée en ce que** la première paroi de guidage (9. 1, 9.2) est conçue de manière coaxiale à l'axe de rotation (1.1) du disque de rotor (1).

3. Turbine Pelton selon les revendications 1 ou 2, **caractérisée en ce que** la paroi de guidage (9.1, 9.2) est conique ou cylindrique ou encore s'évase en forme de trompette en s'éloignant du disque de rotor (1).

4. Turbine Pelton selon l'une des revendications 1 à 3, **caractérisée en ce que** la distance entre l'extrémité externe radiale des augets Pelton (2) et l'extrémité interne radiale de la première paroi de guidage (9.1, 9.2) est au moins égale à l'allongement radial de chaque auget Pelton (2).

5. Turbine Pelton selon l'une des revendications 1 à 4, **caractérisée en ce que** les corps de buse (3.1, 3.2, 3.3) sont solidaires du carter (6).

6. Turbine Pelton selon l'une des revendications 1 à 5, présentant les caractéristiques suivantes:
6.1 l'axe de rotation (1.1) du disque de rotor (1) est horizontal ou vertical ou encore incliné par rapport à l'horizontale ;
6.2 au moins l'une des parois de guidage (9.1, 9.2; 10.1, 10.2) n'est qu'un segment annulaire libérant au moins une partie importante de circonférence inférieure du disque de rotor.
